(19) Europäisches Patentamt
European Patent Office
Office européen des brevets

(11) EP 4 790 983 A1

# (12) EUROPEAN PATENT APPLICATION

(43) Date of publication:
**12.08.2026 Bulletin 2026/33**

(21) Application number: **25155941.5**

(22) Date of filing: **05.02.2025**

(51) International Patent Classification (IPC):
***H04N 9/73*** *(2023.01)* ***G06V 10/60*** *(2022.01)*

(52) Cooperative Patent Classification (CPC):
**H04N 9/73; G06V 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
- **HU, Pengfei**
  **1105AW Amsterdam (NL)**
- **XIAOYAN, Xing**
  **3442BH Woerden (NL)**
- **GEVERS, Theo**
  **1091HR Amsterdam (NL)**

## (54) DEVICE, DATA STRUCTURE, AND METHOD FOR DETERMINING AN ILLUMINATION MAP

(57) A device, a data structure, and a method for predicting an illumination map, wherein the method comprises providing an input image (112) comprising a first illumination and a second illumination, determining a decomposition of the first illumination depending on the input image (112), determining a decomposition of the second illumination depending on the input image, and determining (506) the illumination map depending on the decompositions.

112
110
114
118
122
102
106
120
104
108
116
100

Fig. 1

EP 4 790 983 A1

## Description

Background

The invention relates to a device, a data structure, and a method for predicting an illumination map.

Attentive Illumination Decomposition (arXiv:2402.18277v1) is a mechanism for solving the multi-illuminant white balancing problem by decomposing a mixed illumination map into a weight map and a chromaticity vector of each light source.

Disclosure of the invention

A method for predicting an illumination map comprises providing an input image comprising a first illumination and a second illumination, determining a decomposition of the first illumination depending on the input image, determining a decomposition of the second illumination depending on the input image, and determining the illumination map depending on the decompositions. The input image comprises pixels. The method predicts the decompositions from the pixels of the input image.

Determining the decompositions may comprise determining a first weight map, and a first chromaticity vector for the first illumination depending on the input image, and determining a second weight map, and a second chromaticity vector for the second illumination depending on the input image, wherein determining the illumination map comprises determining the illumination map depending on the weight maps, and the chromaticity vectors. This means, the method predicts the weight maps and chromaticity vectors from the pixels of the input image.

Determining the decomposition of the first illumination may comprise determining a first embedding depending on the input image, in particular with a first encoder that is configured for encoding the input image into the first embedding, determining a second embedding depending on the input image, in particular with a second encoder that is configured for encoding the input image or the resized input image into the second embedding, and determining the first chromaticity vector and the first weight map depending on the embeddings, in particular with a decoder that is configured for decoding an input of the decoder that depends on the embeddings into the first chromaticity vector and the first weight map. The embeddings comprise features extracted from the input image or the resized input image in an embedding space. This information can be processed efficiently by the decoder.

Determining the decomposition of the second illumination may comprise determining the second chromaticity vector and the second weight map depending on the embeddings, in particular with the decoder, wherein the decoder is configured for decoding the input of the decoder into the second chromaticity vector and the second weight map.

The method may comprise determining the second embedding with the second encoder, wherein the second encoder comprises convolutional layers, wherein determining the second embedding comprises obtaining the second embedding from the output of different convolutional layers of the second encoder. The second embedding from the several convolutional layers comprise spatial information that is combined with the first embedding to incorporate the spatial information.

For training determining the chromaticity vectors and the weight maps with the decoder, the method may comprise providing a ground truth for the chromaticity vectors and a ground truth for the weight maps, and training the decoder depending on a loss function that comprises a first term that depends on the chromaticity vectors and the ground truth for the chromaticity vectors, and a second term that depends on the weight maps and the ground truth for the weight maps.

The method may comprise decomposing the input image into a first single-illuminant scene for the first illumination, and a second single-illuminant scene for the second illumination, predicting the decomposition of the illuminations, for example the weight maps, and the chromaticity vectors, from the single-illuminant scenes separately.

The input image comprises pixels, wherein the first weight map associates the pixels of the input image with one weight respectively, wherein method comprises determining whether the weight associated with a pixel indicates that the pixel is associated with the first illumination or not, associating the pixel with the first illumination when the weight indicates that the pixel is associated with the first illumination, and otherwise not associating the pixel with the first illumination.

The method may comprise providing a threshold indicating whether a weight indicates that the pixel is associated with the first illumination or not, and determining a binary mask for a masked input image distinguishing the weights of the first weight map exceeding the threshold from the other weights of the first weight map.

A device for predicting an illumination map, characterized in that the device comprises at least one processor and at least one memory, wherein the at least one memory is configured for storing instructions that are executable by the at least one processor, wherein the instructions, when executed by the at least one processor, cause the device to execute the method.

A computer program for predicting an illumination map comprises computer-readable instructions that when executed by the computer cause the computer to execute the method.

A data structure for predicting an illumination map comprises at least one data field for an input image comprising a first illumination and a second illumination, a decomposition of the first illumination that is determined depending on the input image, a decomposition of the second illumination that is determined depending on the

input image, and the illumination map that is determined depending on the decompositions.

Further examples are derived from the following description and the drawing. In the drawing:

Fig. 1 schematically depicts a first pipeline for predicting an illumination map,
Fig. 2 schematically depicts a second pipeline for predicting an illumination map,
Fig. 3 schematically depicts a device for predicting an illumination map,
Fig. 4 schematically depicts a data structure for predicting an illumination map,
Fig. 5 schematically depicts steps of a method for predicting an illumination map.

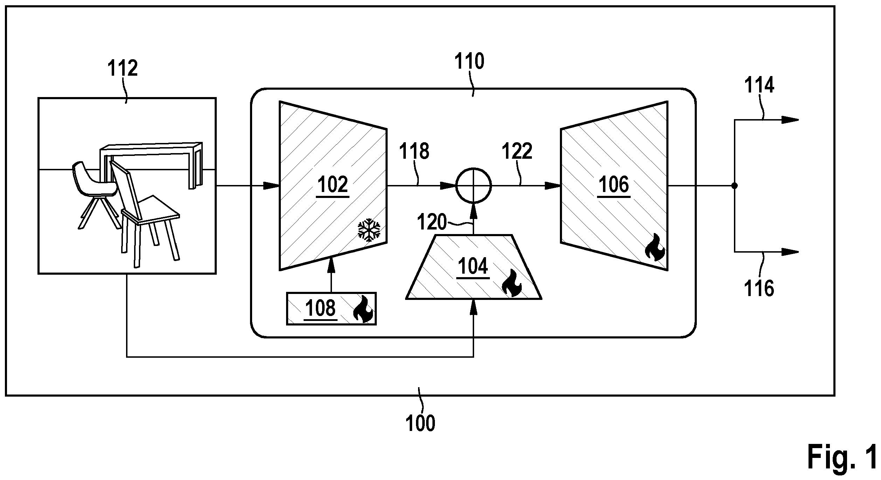

Figure 1 schematically depicts a first inference pipeline 100 for predicting an illumination map. Predicting the illumination map is described by way of example of an exemplary image model. The exemplary image model is given by

$$I(x) = r(x) \odot \eta(x) l$$

where x denotes the location, I represents an RGB image, r represents a surface reluctance in RGB, $\eta$ is a scaling term that includes the intensity of the illumination and shading, $l$ denotes an RGM illuminant chromaticity vector, and $\odot$ represents the dot product.

A scene with multiple illuminants may be extended as follows:

$$I(x) = r(x) \odot \sum_{i}^{N} (\eta_i(x) l_i)$$

A corresponding white-balance image may be described as

$$\hat{I}(x) = r(x) \odot \sum_{i}^{N} (\eta_i(x) L)$$

where $L$ refers to the chromaticity vector of the canonical light source. Since the scaling term $\eta$ is multiplied, $L$ may be expressed as $L = (1,1,1)^T$. The white-balanced image can be expressed as:

$$\hat{I} = I \oslash \left( \sum_{i}^{N} \alpha_i l_i \right)$$

where

$$\alpha_i = \frac{\eta_i}{\sum_j^N \eta_j}$$

where N represent the number of illuminants, $\oslash$ represents element-wise division, $\alpha_i$ represents a weight map, and $l_i$ represents chromaticity vector of illuminant i.

According to an example, $\alpha$ represents the stacked N-channel weight map comprising $\alpha_i$, $i = 1, \ldots, N$.

According to an example, $l$ represents the stacked N-channel chromaticity comprising $l_i$, $i = 1, \ldots, N$

The first inference pipeline 100 is configured for predicting the decomposition of illuminations, i.e., weight map $\alpha_i$, and chromaticity vector $l_i$ from one illumination separately.

After the predictions, the final illumination map, e.g., $\sum_i^N \alpha_i l_i$ , may be determined.

The first inference pipeline 100 comprises, for example, a first encoder 102, a second encoder 104, and a decoder 106.

The first encoder 102 is for example based on the image encoder of SAM. The first encoder 102 is in the example adaptable by an adaptor 108. The adaptor 108 is for example configured for low-rank adaptation (LoRA).

SAM is described for example in Kirillov, A.; Mintun, E.; Ravi, N.; Mao, H.; Rolland, C.; Gustafson, L.; Xiao, T.; Whitehead, S.; Berg, A. C.; Lo, W.-Y.; et al. 2023. Segment anything. In ICCV, 4015-4026.

SAM leverages a pre-trained Vision Transformer (ViT). An example for a ViT is described in Dosovitskiy, A.; Beyer, L.; Kolesnikov, A.; Weissenborn, D.; Zhai, X.; Unterthiner, T.; Dehghani, M.; Minderer, M.; Heigold, G.; Gelly, S.; et al. 2020. An image is worth 16x16 words: Transformers for image recognition at scale. arXiv preprint arXiv:2010.11929.

The ViT may be adapted to handle high-resolution inputs for segmentation tasks. An example for adapting the ViT for segmentation tasks is described in Li, Y.; Mao, H.; Girshick, R.; and He, K. 2022. Exploring plain vision transformer backbones for object detection. In ECCV, 280-296. Springer.

The multi-illuminant estimation problem may be considered as a task comprising a pixel-wise illuminant weight map segmentation and a region-wise chromaticity vector prediction.

For example, the first encoder 102, in particular the image encoder of SAM, is configured to handle this cross-domain task using LoRA.

LoRA is for example described in Hu, E. J.; Shen, Y.; Wallis, P.; Allen-Zhu, Z.; Li, Y.; Wang,S.;Wang, L.; and Chen,W. 2021. Lora: Low-rank adaptation of large language models. arXiv preprint arXiv:2106.09685.

The first encoder 102 is for example configured handling continuous weight maps for object segmentation.

For example, the first encoder 102 is based on the image encoder of SAM. For example, the image encoder of SAM is modified for handling continuous

weight maps, instead of binary masks that are used for object segmentation in SAM. For example, the encoder for sparse prompts in the image encoder of SAM is omitted in the first encoder 102.

The first encoder 102, the second encoder 104, and the decoder 106 may be arranged as parts of a model 110.

The model 110 is configured for mapping an input image 112 to a weight map 114 that is associated with the input image 112. The model 110 is configured for mapping the input image 112 to a chromaticity vector 116 that is associated with the input image 112.

The model 110 is for example configured to generate predictions of constant size, each comprising one weight map 114 and one associated chromaticity vector 116.

The model 110 is for example configured for determining a first embedding 118 with the first encoder 102 depending on the input image 112.

The first encoder 102 is for example configured for encoding the input image 112 into the first embedding 118. This means, the model 110 is for example configured for processing the input image 112 with the first encoder 102 to extract the first embedding 118.

The model 110 is for example configured for determining a second embedding 120 with the second encoder 104.

According to an example, the model 110 is configured for processing the input image 112 with the second encoder 104 to extract the second embedding 120. The second embedding 120 is used for establishing spatial correspondence.

According to an example, the model 110 is configured for resizing the input image 112 into a resized input image and processing the resized input image with the second encoder 104 to extract the second embedding 120. Embedding the resized input images maintains the spatial context.

The second encoder 104 may comprise several convolutional layers. The model 110 may be configured for obtaining the second embedding 120 from the output of different convolutional layers of the second encoder 104. This incorporates spatial information.

The model 110 may be configured for adding, concatenating or multiplying the first embedding 118 and the second embedding 120 to an input 122 for the decoder 106.

The model 110 may be configured for mapping the input 122 for the decoder 106 with the decoder 106 to the weight map 114 that is associated with the input image 112, and to the chromaticity vector 116 that is associated with the input image 112.

The model 110 may be configured for determining the illumination map $\hat{I}$ depending on the weight map 114 and the chromaticity vector 116.

The decoder 106 may be learnable. The decoder 106 comprises for example a stacked multi-layer perceptron (MLP) network, e.g., instead of a single MLP that is used in SAM. This allows to more effectively handle the decomposition of illumination.

The decoder 106 is for example configured to handle the decomposition of the illumination in the dimensions of the chromaticity vector 116.

In a training, the dimensions of the chromaticity vector 116 may be used for mask matching.

The chromaticity vector 116 for the RGB image I has three dimensions.

The decoder 106 comprises for example a nearest-neighbor interpolation followed by a two-dimensional (2D) convolution, e.g., instead of a transposed convolution layer that is used in SAM.

The nearest-neighbor interpolation followed by the 2D convolution is described for example in Odena, A.; Dumoulin, V.; and Olah, C. 2016. Deconvolution and Checkerboard Artifacts. Distill.

The nearest-neighbor interpolation followed by the 2D convolution helps to reduce checkerboard artifacts in the outputs.

During training, some padding illuminations may be generated and added. The quantity of the padding illuminations may be determined by the actual number of illuminations present in each scene $I(x)$.

A padding illumination is provided, for example, with a weight map of $\alpha_i = 0$. This means there is no expert influence on the illumination map, e.g., $\sum_i^N \alpha_i \, l_i$ , of the padding illumination.

Therefore, the color of the light source can vary, rendering the chromaticity vector $l_i$ unconstrained.

According to an example, an angular loss function is employed to supervise the chromaticity vectors. The angular loss function is for example:

$$L_a(\hat{e}, e) = \arccos\left(\frac{e}{\|e\|} \cdot \frac{\hat{e}}{\|\hat{e}\|}\right)$$

where $\hat{e}$ and $e$ denote vectors representing different objects.

The angular loss function may be used for training. The Hungarian algorithm may be used to establish a bipartite matching between ground truth and predicted decomposition. This technique ensures effective training without relying on prediction order.

The Hungarian algorithm is for example described in Kuhn, H. W. 1955. The Hungarian method for the assignment problem. Naval research logistics quarterly, 2(1-2): 83-97.

A specific loss function $L_t$ may be used for training that is defined as follows.

Firstly, a set of matched indices $\sigma_m$ which minimize the L1 cost between the decomposition and ground truth may be calculated as:

$$\sigma_m = \arg\min_{\sigma} \sum_{i}^{N} \left( \left| l_i - \hat{l}_{\sigma(i)} \right| + \left| \alpha_i - \hat{\alpha}_{\sigma(i)} \right| \right)$$

where N is a pre-defined number of illuminants, $\sigma$ is one of the combinations of N elements from set 1, ... , N, and where $\hat{l}$ denotes a predicted chromaticity vector, $l$ denotes a ground truth chromaticity vector, $\hat{\alpha}$ denotes a predicted weight map, and $\alpha$ denotes a ground truth weight map.

This approach allows for adaptive adjustment of the order of decomposition, facilitating efficient model training.

The rearranged ground truth weight maps based on the permutation $\sigma_m$ are stacked again and denoted as $\hat{\alpha}_{\sigma m}$.

The full loss $L_t$ comprises $L_c$ supervising chromaticity vectors and $L_w$ supervising weight maps:

$$L_t = w_c L_c + w_w L_w$$

where $w_c$ is a weight term for $L_c$ and $w_w$ is a weight term for $L_w$.

In terms of $L_w$, the training may comprise calculating a mean absolute error (MAE) pixel-wise, i.e., instead of across an entire vector of the weight map:

$$L_w = \frac{1}{M} \sum_{x}^{M} \left( L_a\left(\alpha(x), \hat{\alpha}_{\sigma m}\right) \right)$$

where M is the number of pixels in the weight map, and $\alpha$ (*x*) denotes the pixel value of stacked weight map a location x.

In terms of $L_c$, the training may comprise calculating a weighted MAE by introducing a mean value of the ground truth weight map as the weight term:

$$L_c = \frac{1}{N} \sum_{i}^{N} \left( \overline{\hat{\alpha}_{\sigma m}} L_a\left(l_i, \hat{l}_{\sigma m}\right) \right)$$

where $\hat{\alpha}_{\sigma m}$, represents the mean value of adjusted weight map ground truth.

As a result, a stronger illumination contributes more to the term $L_c$, and artificially added illuminations have no influence on training.

The training may not directly supervise the final illumination map throughout the training process. This strategy ensures the integrity of decomposition without the need for additional supervision.

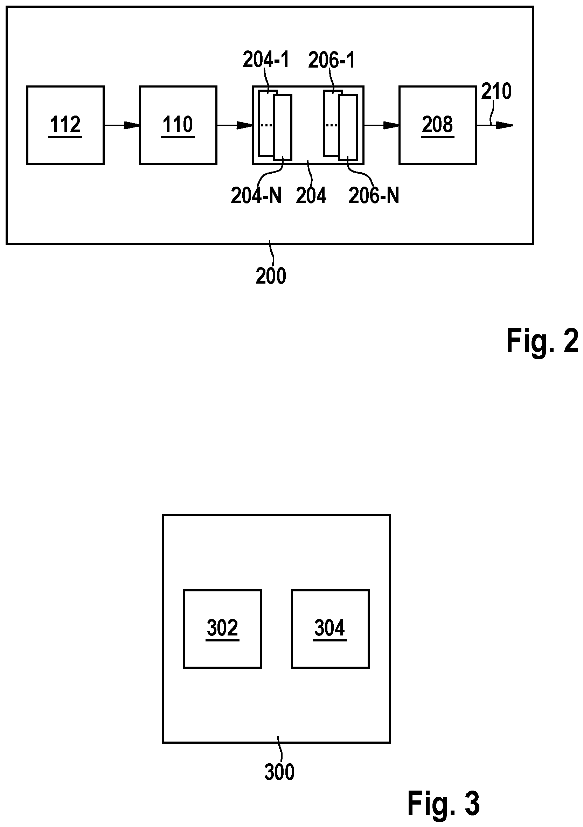

Figure 2 illustrates a second inference pipeline 200.

The second inference pipeline 200 is configured for decomposing a multi-illuminant scene in the input image 112 into several single-illuminant scenes 202. This decomposition enables a multi-illuminant estimation application of existing single-illuminant methods without the need for additional training.

The second inference pipeline 200 comprises the model 110. The model 110 is configured for the decomposing of the multi-illuminant scene into the several single-illuminant scenes 202.

According to an example, the model 110 is configured for decomposing of the multi-illuminant scene into the several, e.g., N, single-illuminant scenes and predicting the decomposition 202 of illuminations, i.e., weight map $\alpha_i$, and chromaticity vector $l_i$, from the single-illuminant scenes separately. The decomposition 202 comprises for example the weight maps 204-1, ... 204-N and the masked input images and 206-1, ... , 206-N, wherein a weight map 204-i is associated with a masked input image 206-i.

The model 110 may be configured for predicting the decomposition of illuminations, i.e., weight map $\alpha_i$, and chromaticity vector $l_i$, for the single-illuminant scenes separately.

The model 110 may be configured for normalizing each predicted weight map $\alpha_i$ in particular to the range [0, 1]. The model 110 may be configured for normalizing each predicted weight map $\alpha_i$ by:

$$\hat{\alpha}_i = \frac{\alpha_i}{\max(\alpha_i)}$$

The model 110 may be configured for generating binary masks, in particular by thresholding the normalized weight maps $\alpha_i$ in particular with a predefined threshold $\theta$. This process isolates pixels corresponding to each illuminant, allowing the scene to be easily decomposed into single illuminant components.

The second pipeline 200 may comprise a single-illuminant method based model 208. The single-illuminant method based model 208 may be configured for predicting a local illumination estimation $\hat{\ell}_i$ for illuminant *i*. The second pipeline 200 may be configured for using existing method for predicting the local illumination estimation $\hat{\ell}_i$. The second pipeline 200 may be configured for generating an output 210 comprising an illumination map, e.g., $\sum_i^N \alpha_i \hat{\ell}_i$ ) determined with $\alpha_i$ and $\hat{\ell}_i$.

The training may comprise training the model 110 on the LSMI data set. The LSMI dataset is described for example in Kim, D.; Kim, J.; Nam, S.; Lee, D.; Lee, Y.; Kang, N.; Lee, H.-E.; Yoo, B.; Han, J.-J.; and Kim, S. J. 2021. Large scale multi-illuminant (lsmi) dataset for developing white balance algorithm under mixed illumination. In ICCV, 2410-2419.

The trained model 110 is capable of zero-shot generalization.

For zero-shot generalization, the method may comprise training the model 110 with the Sony split of the LSMI dataset.

The method may comprise testing the zero-shot generalization ability of the model 110 with the Sony split

of the NUS-8 dataset. The NUS-8 dataset is described for example in Cheng, D.; Prasad, D. K.; and Brown, M. S. 2014. Illuminant estimation for color constancy: why spatial-domain methods work and the role of the color distribution. JOSA A, 31(5): 1049-1058.

Figure 3 schematically depicts a device 300 for predicting an illumination map.

The device 300 comprises at least one processor 302 and at least one memory 304.

The at least one memory 304 is configured for storing instructions that are executable by the at least one processor 302.

The instructions, when executed by the at least one processor 302, cause the device 300 to execute a method for predicting an illumination map.

A computer program for predicting the illumination map may be provided. The computer program comprises computer-readable instructions that when executed by the computer cause the computer to execute the method.

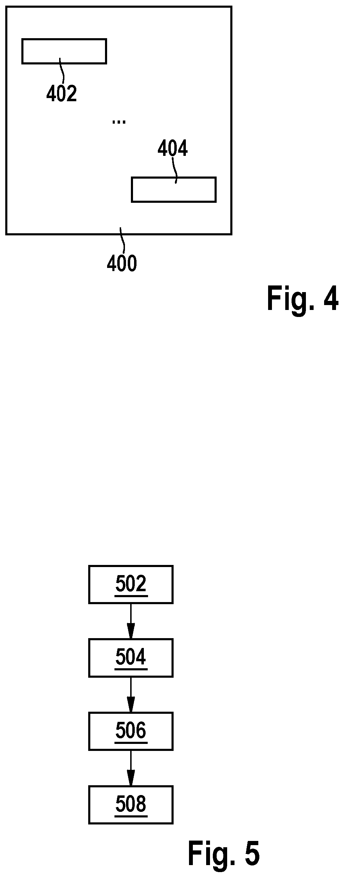

Figure 4 schematically depicts a data structure 400 for predicting the illumination map.

The data structure 400 comprises at least one data field 402 for the input image 112, for the decompositions of the illuminations that are determined depending on the input image 112, and the illumination map that is determined depending on the decompositions.

Figure 5 schematically depicts steps of the method for predicting an illumination map.

The method comprises a step 502.

The step 502 comprises providing the input image 112.

The input image 112 comprises pixels.

The method is described by way of example of the input image 112 comprising a first illumination i=1 and a second illumination i=2.

The method is not limited to two illuminations. The method may process multiple illuminations.

The method comprises a step 504.

The step 504 comprises determining decompositions for the illuminations depending on the input image 112.

The step 504 comprises for example determining a decomposition, e.g., $\alpha_1$, $l_1$, of the first illumination depending on the input image 112. This means, determining the decompositions for example comprises determining a first weight map $\alpha_1$, and a first chromaticity vector $l_1$ for the first illumination.

The step 504 comprises for example determining a decomposition, e.g., $\alpha_2$, $l_2$, of the second illumination depending on the input image 112.

This means, determining the decompositions for example comprises determining a second weight map $\alpha_2$, and a second chromaticity vector $l_2$ for the second illumination.

For multiple illuminations, the method may comprise determining the decompositions, e.g., the weight maps $\alpha_i$, and a chromaticity vectors $l_i$ for the different illuminations i.

The weight map $\alpha_i$ associates the pixels of the input image 112 with one weight respectively.

Determining the decomposition of the first illumination may comprise determining the first embedding 118 depending on the input image 112. The first embedding 118 is for example determined with the first encoder 102.

Determining the decomposition of the first illumination may comprise determining the second embedding 120 depending on the input image 112.

The second embedding 120 is for example determined with the second encoder 104.

The second embedding 120 may be determined by encoding the input image 112 or the resized input image into the second embedding 120.

The first chromaticity vector $l_1$ and the first weight map $\alpha_1$ may be determined depending on the embeddings 118, 120.

The first chromaticity vector $l_1$ and the first weight map $\alpha_1$ may be determined with the decoder 106.

The second chromaticity vector $l_2$ and the second weight map $\alpha_2$ may be determined depending on the embeddings 118, 120.

The second chromaticity vector $l_2$ and the second weight map $\alpha_2$ may be determined with the decoder 106.

The second embedding 120 may be determined with the second encoder 104 that comprises the convolutional layers. Determining the second embedding 120 for example comprises obtaining the second embedding 120 from the output of different convolutional layers of the second encoder 104.

The method comprises a step 506.

The step 506 comprises determining the illumination map depending on the decompositions.

For the two decompositions, the illumination map, e.g., $\sum_i^{N=2} \alpha_i l_i$ , is determined. This means, the illumination map is for example determined depending on the weight maps ($\alpha_1$, $\alpha_2$), and the chromaticity vectors ($l_1$, $l_2$).

For multiple illuminations, e.g., N illuminations, the method may comprise determining the illumination map, e.g., $\sum_i^N \alpha_i l_i$ , depending on the decompositions for the different illuminations.

The method may comprise a step 508.

The step 508 comprises training the decoder 106.

The step 508 may comprise training the decoder 106 for determining the chromaticity vectors, e.g., $l_1$, $l_2$ and the weight maps, e.g., $\alpha_1$, $\alpha_2$ with the decoder 106.

The method may comprise comprises providing a ground truth for the chromaticity vectors, e.g., $l_1$, $l_2$, and a ground truth for the weight maps, e.g., $w_1$,$w_2$.

The decoder 106 may be trained depending on the loss function *Lt*.

The loss function $L_t$ comprises the term $L_c$ that depends on the chromaticity vectors, e.g., $l_1$, $l_2$, and the ground truth for the chromaticity vectors.

The loss function $L_t$ comprises the term $L_w$ that depends on the weight maps, e.g., $w_1$, $w_2$, and the ground truth for the weight maps.

The input image 112 may be part of illuminations for training the decoder 106. The decoder 106 may be trained on the illuminations comprising the input image 112. The illuminations for training the decoder 106 may comprise the additional padding illuminations.

The method may comprise decomposing the input image 112 into a first single-illuminant scene for the first illumination, and a second single-illuminant scene for the second illumination, and predicting the decomposition of the illuminations from the single-illuminant scenes separately. This means, the weight maps $\alpha_i$, and the chromaticity vectors $l_i$ are predicted from a single-illuminant scene respectively.

The method may comprise determining whether the weight associated with a pixel according to a weight map $\alpha_i$ indicates that the pixel is associated with the illumination i or not.

The method may comprise associating the pixel with the illumination i when the weight associated with the pixel indicates that the pixel is associated with the illumination i, and otherwise not associating the pixel with the illumination i.

The method may comprise providing a threshold indicating whether a weight indicates that the pixel is associated with the illumination i or not.

The method may comprise determining a binary mask for a masked input image distinguishing the weights of the weight map $\alpha_i$ exceeding the threshold from the other weights of the first weight map $\alpha_i$.

The method for example comprises determining the weight maps 204-1, ... 204-N and the binary masks for the masked input images and 206-1, ..., 206-N.

## Claims

1. A method for predicting an illumination map, **characterized in that** the method comprises providing (502) an input image (112) comprising a first illumination and a second illumination, determining (504) a decomposition of the first illumination depending on the input image (112), determining (504) a decomposition of the second illumination depending on the input image, and determining (506) the illumination map depending on the decompositions.

2. The method according to claim 1, **characterized in that** determining (504) the decompositions comprises determining a first weight map, and a first chromaticity vector for the first illumination depending on the input image (112), and determining a second weight map, and a second chromaticity vector for the second illumination depending on the input image (112), wherein determining (506) the illumination map comprises determining the illumination map depending on the weight maps, and the chromaticity vectors.

3. The method according to claim 2, **characterized in that** determining (504) the decomposition of the first illumination comprises determining a first embedding (118) depending on the input image (112), in particular with a first encoder (102) that is configured for encoding the input image (112) into the first embedding (118), determining a second embedding (120) depending on the input image (112), in particular with a second encoder (104) that is configured for encoding the input image (112) or the resized input image into the second embedding (120), and determining the first chromaticity vector and the first weight map depending on the embeddings (118, 120), in particular with a decoder (106) that is configured for decoding an input of the decoder (106) that depends on the embeddings into the first chromaticity vector and the first weight map.

4. The method according to claim 3, **characterized in that** determining (504) the decomposition of the second illumination comprises determining the second chromaticity vector and the second weight map depending on the embeddings (118, 120), in particular with the decoder (106), wherein the decoder (106) is configured for decoding the input of the decoder (106) into the second chromaticity vector and the second weight map.

5. The method according to one of the claims 2 to 4, **characterized by** determining the second embedding (120) with the second encoder (104), wherein the second encoder (104) comprises convolutional layers, wherein determining the second embedding (120) comprises obtaining the second embedding (120) from the output of different convolutional layers of the second encoder (104).

6. The method according to one of the claims 2 to 5, **characterized by** determining the chromaticity vectors and the weight maps with the decoder (106), wherein the method comprises providing a ground truth for the chromaticity vectors and a ground truth for the weight maps, and training (508) the decoder (106) depending on a loss function that comprises a first term that depends on the chromaticity vectors and the ground truth for the chromaticity vectors, and a second term that depends on the weight maps and the ground truth for the weight maps.

7. The method according to one of the previous claims, **characterized in that** the method comprises de-

composing the input image (112) into a first single-illuminant scene for the first illumination, and a second single-illuminant scene for the second illumination, predicting the decomposition of the illuminations, for example the weight maps, and the chromaticity vectors, from the single-illuminant scenes separately.

**8.** The method according to one of the previous claims, **characterized in that** the input image (112) comprises pixels, wherein the first weight map associates the pixels of the input image (112) with one weight respectively, wherein method comprises determining whether the weight associated with a pixel indicates that the pixel is associated with the first illumination or not, associating the pixel with the first illumination when the weight indicates that the pixel is associated with the first illumination, and otherwise not associating the pixel with the first illumination.

**9.** The method according to claim 8, **characterized in that** the method comprises providing a threshold indicating whether a weight indicates that the pixel is associated with the first illumination or not, and determining a binary mask for a masked input image (208-1) distinguishing the weights of the first weight map exceeding the threshold from the other weights of the first weight map).

**10.** A device (300) for predicting an illumination map, **characterized in that** the device (300) comprises at least one processor (302) and at least one memory (304), wherein the at least one memory (304) is configured for storing instructions that are executable by the at least one processor (302), wherein the instructions, when executed by the at least one processor (302), cause the device (300) to execute the method according to one of the claims 1 to 9.

**11.** A computer program for predicting an illumination map, **characterized in that** the computer program comprises computer-readable instructions that when executed by the computer cause the computer to execute the method according to one of the claims 1 to 9.

**12.** A data structure (400) for predicting an illumination map, **characterized in that** the data structure comprises at least one data field (402) for an input image (112) comprising a first illumination and a second illumination, a decomposition of the first illumination that is determined depending on the input image (112), a decomposition of the second illumination that is determined depending on the input image (112), and the illumination map that is determined depending on the decompositions.

100
102
104
106
108
110
112
114
116
118
120
122

Fig. 1

204-1
206-1
210
112
110
208
204-N
204
206-N
200

Fig. 2

302
304
300

Fig. 3

402
...
404
400

Fig. 4

502
504
506
508

Fig. 5

Europäisches Patentamt
European Patent Office
Office européen des brevets

# EUROPEAN SEARCH REPORT

Application Number
EP 25 15 5941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KIM DONGYOUNG ET AL: "Attentive Illumination Decomposition Model for Multi-Illuminant White Balancing", 2024 IEEE/CVF CONFERENCE ON COMPUTER VISION AND PATTERN RECOGNITION (CVPR), IEEE, 16 June 2024 (2024-06-16), pages 25512-25521, XP034694817, DOI: 10.1109/CVPR52733.2024.02410 [retrieved on 2024-09-16] * Section 3.; page 25514 - page 25516; figures 2, 3 * | 1-12 | INV. H04N9/73 G06V10/60 |
| X | US 2022/292635 A1 (KANG NAHYUP [KR] ET AL) 15 September 2022 (2022-09-15) | 1-5,7-12 | |
| A | * paragraphs [0074] - [0076], [0083] - [0090]; figures 4,5 * | 6 | |
| A | VRSNAK DONIK ET AL: "Illuminant estimation error detection for outdoor scenes using transformers", 2021 12TH INTERNATIONAL SYMPOSIUM ON IMAGE AND SIGNAL PROCESSING AND ANALYSIS (ISPA), IEEE, 13 September 2021 (2021-09-13), pages 276-281, XP033983669, DOI: 10.1109/ISPA52656.2021.9552045 [retrieved on 2021-09-28] * page 277 - page 279; figures 2-5 * | 1-12 | TECHNICAL FIELDS SEARCHED (IPC): H04N G06V |

-/--

The present search report has been drawn up for all claims

1

| Place of search | Date of completion of the search | Examiner |
|---|---|---|
| Munich | 13 June 2025 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EUROPEAN SEARCH REPORT

Application Number
EP 25 15 5941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FENG ZIYU ET AL: "SMM: Self-supervised Multi-Illumination Color Constancy Model with Multiple Pretext Tasks", INFORMATION SCIENCE AND SYSTEMS, ACM, 2 PENN PLAZA, SUITE 701NEW YORKNY10121-0701USA, 26 October 2023 (2023-10-26), pages 8653-8661, XP098073349, DOI: 10.1145/3581783.3612057 ISBN: 978-1-4503-6103-3 * Section 3.3 Color Constancy for Multiple Illumination; page 8657; figure 2(b) * ----- | 1-12 | |
| A | ZHANG WEN ET AL: "Color Decoupling for Multi-Illumination Color Constancy", IEEE TRANSACTIONS ON CIRCUITS AND SYSTEMS FOR VIDEO TECHNOLOGY, IEEE, USA, vol. 35, no. 5, 26 December 2024 (2024-12-26), pages 4087-4099, XP034889257, ISSN: 1051-8215, DOI: 10.1109/TCSVT.2024.3523019 [retrieved on 2024-12-26] * Section B.; page 4089 * ----- | 1-12 | TECHNICAL FIELDS SEARCHED (IPC) |

The present search report has been drawn up for all claims

1

| Place of search | Date of completion of the search | Examiner |
|---|---|---|
| Munich | 13 June 2025 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 5941

This annex lists the patent family members relating to the patent documents cited in the above-mentioned European search report. The members are as contained in the European Patent Office EDP file on The European Patent Office is in no way liable for these particulars which are merely given for the purpose of information.

13-06-2025

| Patent document cited in search report | Publication date | Patent family member(s) | Publication date |
|---|---|---|---|
| US 2022292635 A1 | 15-09-2022 | CN 115082328 A | 20-09-2022 |
| | | EP 4057609 A1 | 14-09-2022 |
| | | US 2022292635 A1 | 15-09-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **KIRILLOV, A.** ; **MINTUN, E.** ; **RAVI, N.** ; **MAO, H.** ; **ROLLAND, C.** ; **GUSTAFSON, L.** ; **XIAO, T.** ; **WHITEHEAD, S.** ; **BERG, A. C.** ; **LO, W.-Y. et al.** Segment anything. *ICCV*, 2023, 4015-4026
- **DOSOVITSKIY, A.** ; **BEYER, L.** ; **KOLESNIKOV, A.** ; **WEISSENBORN, D.** ; **ZHAI, X.** ; **UNTERTHINER, T.** ; **DEHGHANI, M.** ; **MINDERER, M.** ; **HEIGOLD, G.** ; **GELLY, S. et al.** An image is worth 16x16 words: Transformers for image recognition at scale. *arXiv:2010.11929*, 2020
- Exploring plain vision transformer backbones for object detection. **LI, Y.** ; **MAO, H.** ; **GIRSHICK, R.** ; **HE, K.** ECCV. Springer, 2022, 280-296
- **HU, E. J.** ; **SHEN, Y.** ; **WALLIS, P.** ; **ALLEN-ZHU, Z.** ; **LI, Y.** ; **WANG,S.** ; **WANG, L.** ; **CHEN,W.** Lora: Low-rank adaptation of large language models. *arXiv:2106.09685*, 2021
- **ODENA, A.** ; **DUMOULIN, V.** ; **OLAH, C.** Deconvolution and Checkerboard Artifacts. *Distill*, 2016
- **KUHN, H. W.** The Hungarian method for the assignment problem. *Naval research logistics quarterly*, 1955, vol. 2 (1-2), 83-97
- **KIM, D.** ; **KIM, J.** ; **NAM, S.** ; **LEE, D.** ; **LEE, Y.** ; **KANG, N.** ; **LEE, H.-E.** ; **YOO, B.** ; **HAN, J.-J.** ; **KIM, S. J.** Large scale multi-illuminant (lsmi) dataset for developing white balance algorithm under mixed illumination. *ICCV*, 2021, 2410-2419
- **CHENG, D.** ; **PRASAD, D. K.** ; **BROWN, M. S.** Illuminant estimation for color constancy: why spatial-domain methods work and the role of the color distribution. *JOSA A*, 2014, vol. 31 (5), 1049-1058